# EUROPÄISCHE PATENTSCHRIFT

(11) **EP 2 319 161 B1**
(45) Veröffentlichungstag und Bekanntmachung des Hinweises auf die Patenterteilung: **03.04.2013**
(21) Anmeldenummer: 09780690.5
(22) Anmeldetag: 16.07.2009
(51) Int. Cl.: H02K 1/27, H02K 15/03

(54) **STATOR ODER LÄUFER EINER ELEKTRISCHEN DREH- ODER WANDERFELDMASCHINE**
STATOR OR ROTOR FOR AN ELECTRICAL MOTOR WITH A ROTATING OR GLIDING FIELD
STATOR OU ROTOR D'UNE MACHINE ÉLECTRIQUE À CHAMP TOURNANT OU GLISSANT

(30) Priorität: 28.08.2008 DE 102008041660
(43) Veröffentlichungstag der Anmeldung: 11.05.2011
(73) Patentinhaber: Robert Bosch GmbH, 70442 Stuttgart (DE)
(72) Erfinder: FEUERROHR, Lin, 77833 Ottersweier (DE); EVANS, Steven Andrew, 77815 Buehl (DE)
(86) Internationale Anmeldenummer: PCT/EP2009/059130
(87) Internationale Veröffentlichungsnummer: WO 2010/023029

(56) Entgegenhaltungen:
- DE-A1-102005 002 332
- DE-A1-102007 029 719
- JP-A- 2000 197 292
- JP-A- 2000 278 896
- JP-A- 2004 289 905
- US-A- 5 581 140
- US-A1- 2005 162 029

## Beschreibung

### Technisches Gebiet

Die vorliegende Erfindung bezieht sich auf einen Stator oder Läufer einer elektrischen Dreh- oder Wanderfeldmaschine, eine elektrische Dreh- oder Wanderfeldmaschine und ein Verfahren zum Herstellen eines Stators oder eines Läufers einer elektrischen Dreh- oder Wanderfeldmaschine. Ferner bezieht sich die vorliegende Erfindung auf eine permanentmagneterregte elektrische Drehfeldmaschine und eine elektrische Fluidpumpe.

### Stand der Technik

Motorisch und/oder generatorisch betreibbare elektrische Maschinen mit rotierendem Läufer bzw. Rotor oder in linearer Bauform finden zahlreiche Anwendungen. Verschiedene Bauformen weisen Permanentmagneten im Stator bzw. Ständer oder im Läufer auf. Diese Permanentmagneten sind beispielsweise als Oberflächenmagneten, Ringmagneten oder vergrabene Magneten ausgeführt.

Der Begriff "vergrabener Magnet" bezeichnet einen Magneten, der in einer Ausnehmung, einer Tasche oder einer Lücke eines Magnetflussleiters angeordnet ist. Der Permanentmagnet wird in die Ausnehmung, Tasche oder Lücke eingeschoben und dort beispielsweise mit Klebstoff oder Blechnasen fixiert. Ein Nachteil dieser Montage ist, dass die Ausnehmung, Tasche oder Lücke so groß sein muss, dass der Permanentmagnet auf jeden Fall eingeführt werden kann. Da sowohl bei der Ausnehmung als auch bei dem Permanentmagneten fertigungstechnisch begründete Toleranzen berücksichtigt werden müssen, verbleibt immer ein Spalt zwischen dem Permanentmagneten und dem Magnetflussleiter. Der Spalt kann zwar mit Klebstoff aufgefüllt werden, bildet jedoch einen Widerstand für den Magnetfluss.

Aus der DE 10 2007 029 719 ist eine elektrische Maschine bekannt geworden, bei der ein Rotor Aussparungen aufweist, in die Magnete axial eingeschoben werden. Dabei sind an der Innenwand der Aussparung federnde Ansätze angeformt, die die Magnete radial und tangential positionieren.

Für viele Anwendungen einer permanentmagneterregten elektrischen Drehfeldmaschine sind ein minimales Rastmoment, eine minimale Welligkeit des Drehmoments und ein maximales mittleres Drehmoment erwünscht. Ein minimales Rastmoment und eine minimale Welligkeit des Drehmoments werden bei einer sinusförmigen Flussdichteverteilung im Luftspalt zwischen Stator und Rotor erzielt. Die Flussdichteverteilung im Luftspalt wird maßgeblich durch die Form, insbesondere die Kontur, der Pole bzw. Polschuhe bestimmt.

Die JP20000197292 zeigt einen Rotor einer elektrischen Maschine, bei dem Magnete innerhalb von Aussparungen im Rotor angeordnet sind. Der Rotor weist bezüglich seines Umfangs einen veränderlichen Durchmesser auf, wobei im Bereich der Magnet-Pole der Rotor einen größeren Durchmesser aufweist, als im Bereich zwischen den Magnetpolen.

Bei der von R. Richter gefundenen und nach ihm benannten Kontur des Rotorpolschuhs ist die Breite des Luftspalts zwischen Rotor und dem zylindrischen Stator eine inverse Kosinusfunktion. Die Richter-Kontur erzeugt in sehr guter Näherung die erwünschte sinusförmige Flussdichteverteilung im Luftspalt, ihre Implementierung in moderne Computerprogramme zur elektromagnetischen und mechanischen Auslegung ist jedoch aufwendig und zeitintensiv.

Als einfacher implementierbare alternative Kontur wird die zentrumsversetzte Bogenkontur verwendet. Die Kontur des Rotorpolschuhs ist kreisbogenförmig, wobei jedoch der Mittelpunkt des Kreisbogens nicht auf der Achse des Rotors liegt, sondern gegenüber dieser radial versetzt ist.

Eine Aufgabe der vorliegenden Erfindung besteht darin, eine verbesserte permanentmagneterregte elektrische Drehfeldmaschine ein Verfahren zum Herstellen einer solchen und eine verbesserte elektrische Fluidpumpe zu schaffen.

### Offenbarung der Erfindung

Diese Aufgaben werden durch die Gegenstände der unabhängigen Ansprüche gelöst. Weiterbildungen der vorliegenden Erfindung sind in den abhängigen Ansprüchen definiert.

Die vorliegende Erfindung beruht auf der Idee bei einer permanentmagneterregten elektrischen Drehfeldmaschine gemäss dem Oberbegriff des Anspruchs 1 einem Luftspalt zwischen der Innenkontur des Stators und der Außenkontur des Rotors zwischen zwei Polen eine maximale Breite und nahe einer Mitte eines Pols eine minimale Breite des Luftspalts so vorzusehen, dass der Quotient aus der maximalen Breite und der minimalen Breite im Bereich von 2,2 bis 2,4 liegt und ein Quotient aus einer Breite eines ersten Pols und einer Breite eines in dem ersten Pol vergrabenen Permanentmagneten im Bereich von 0,74 bis 0,76 liegt. Die Breite des ersten Pols und die Breite des Permanent-magneten werden dabei vorzugsweise in Richtung einer Sehne senkrecht zur Achse des Rotors gemessen.

Der Permanent-magnet wird durch die Rückstellkraft einer elastischen Verformung des Magnetflussleiters in der Ausnehmung geklemmt.

Der Permanentmagnet und die Ausnehmung weisen beispielsweise jeweils die Form eines flachen Quaders auf, dessen Oberfläche sechs im Wesentlichen rechteckige und im Wesentlichen ebene Abschnitte umfasst. Die beiden größten ebenen Abschnitte der Oberfläche des Permanentmagneten können senkrecht zum Magnetfluss und im Wesentlichen parallel zur Polfläche, an der der magnetische Fluss den Magnetflussleiter verlässt, oder zum Scheitel der Polfläche angeordnet sein. Insbesondere die Form der Ausnehmung kann von der Quaderform vor Allem an den Rändern deutlich abweichen.

Anstelle einer jeweils im Wesentlichen quaderförmigen Gestalt können der Permanentmagnet und die Ausnehmung aber auch jeweils eine andere Form aufweisen. Dabei gibt es zumindest einen Bereich, in dem zumindest bei elastisch verformtem elastischen Abschnitt die dreidimensionalen Gestalten des Permanentmagneten und der Ausnehmung einander näherungsweise entsprechen.

Einer oder mehrere elastische Abschnitte des Magnetflussleiters können an oder nahe bei den Rändern des Permanentmagneten angeordnet sein. Im Fall des erwähnten quaderförmigen Permanentmagneten sind beispielsweise zwei elastische Abschnitte nahe zwei kleinen ebenen Abschnitten der Oberfläche des Permanentmagneten angeordnet.

Der oder die elastischen Abschnitte des Magnetflussleiters werden beispielsweise durch gerade oder gebogene Stege gebildet. Einer oder mehrere elastische Abschnitte können zwischen zwei Polen des Läufers angeordnet sein.

Ferner können am Rand der Ausnehmung oder nahe derselben einer oder mehre Eingreifabschnitte vorgesehen sein. In den oder die Eingriffabschnitte kann ein Spreizwerkzeug zum elastischen Aufweiten der Ausnehmung eingreifen. Ferner können eine oder mehrere Flussbarrieren in dem Magnetflussleiter vorgesehen sein. Eingriffabschnitte und Flussbarrieren können identisch sein.

Ein Vorteil einer Klemmung eines Permanentmagneten in einem Magnetflussleiter besteht darin, dass kein Spalt zwischen dem Permanentmagneten und dem Magnetflussleiter verbleibt. Damit wird der magnetische Widerstand der Anordnung reduziert und der magnetische Fluss in der Anordnung erhöht. Dies kommt dem mit einer elektrischen Maschine mit dem Stator oder Läufer erzielbaren Drehmoment bzw. der erzielbaren Kraft zu Gute.

Ein weiterer Vorteil der Klemmung besteht darin, dass kein Klebstoff erforderlich ist und keine Blechnase gebogen werden muss. Allerdings kann zusätzlich Klebstoff verwendet werden. Durch die Wirkung der elastischen Rückstellkraft kann der Klebstoff jedoch bis auf einen sehr dünnen Film aus dem Zwischenraum zwischen Permanentmagnet und Magnetflussleiter verdrängt werden. Die Menge des erforderlichen Klebstoffs wird dadurch reduziert.

Um die beschriebene Klemmung zu erzielen, werden die nominalen Abmessungen des Permanentmagneten und der Ausnehmung und - insoweit frei wählbar - die Toleranzintervalle dieser Abmessungen so gewählt, dass die minimale Dicke innerhalb eines Toleranzintervalls der Dicke des Permanentmagneten größer oder gleich einer maximalen Dicke innerhalb eines Toleranzintervalls der Dicke der Ausnehmung bei entspanntem elastischem Abschnitt ist. Die Dicke wird dabei in der Richtung gemessen, in der die Geometrie der Ausnehmung elastisch veränderbar ist. Bei einigen Ausführungsformen ist die gleichzeitig die Richtung des Magnetfelds. Durch diese Auslegung wird sichergestellt, dass die Dicke des Permanentmagneten größer oder gleich der Dicke der Ausnehmung ist. Die Oberflächen der Ausnehmung liegen damit zumindest an dem Permanentmagneten an oder üben sogar eine pressende Kraft auf diese aus.

Insbesondere bei einer minimalen Breite des Luftspalts im Bereich von 2,0 mm bis 2,5 mm und einem maximalen Rotordurchmesser im Bereich von 30 mm bis 50 mm hat sich herausgestellt, dass mit diesen Parametern nicht nur ein überraschend geringes Rastmoment und eine überraschend geringe Welligkeit des Drehmoments, sondern auch ein hohes mittleres Drehmoment erzielbar sind. Das erzielbare mittlere Drehmoment liegt sogar über dem, das mit einem Rotor mit Richter-Kontur erzielbar wäre.

Wenn der Rotor der Drehfeldmaschine eine Folgepolanordnung mit zwei Permanentmagnetpolen und zwei Folgepolen aufweist, ist eine Breite des Folgepols zwischen 0,58 x π elektrische rad und 0,64 x π elektrische rad optimal. Mit den genannten Parametern eignet sich die Drehfeldmaschine besonders als Nassläufermaschine zum Antreiben einer Kühlmittelpumpe oder einer anderen Fluidpumpe in einem Kraftfahrzeug oder für eine andere Anwendung.

### Kurze Beschreibung der Zeichnungen

Ausführungsbeispiele werden nachfolgend mit Bezug auf die Figuren näher erläutert. Es zeigen:
- Fig. 1: eine schematische Darstellung eines Rotors einer elektrischen Drehfeldmaschine bei der Montage eines Permanentmagneten;
- Fig. 2: eine schematische Darstellung des Rotors aus Fig. 1 nach der Montage;
- Fig. 3: eine schematische Darstellung eines Rotors einer weiteren elektrischen Drehfeldmaschine bei der Montage von Permanentmagneten;
- Fig. 4: eine schematische Darstellung des Rotors aus Fig. 3 nach der Montage;
- Fig. 5: eine schematische Darstellung eines Rotors einer elektrischen Drehfeldmaschine;
- Fig. 6: eine schematische Darstellung eines Rotors einer elektrischen Drehfeldmaschine in Folgpolanordnung;
- Fig. 7: eine schematische Darstellung einer Fluidpumpe mit einer permanentmagneterregten elektrischen Drehfeldmaschine; und
- Fig. 8: ein schematisches Flussdiagramm eines Verfahrens zum Herstellen eines Stators oder Läufers einer elektrischen Maschine.

### Beschreibung der Ausführungsformen

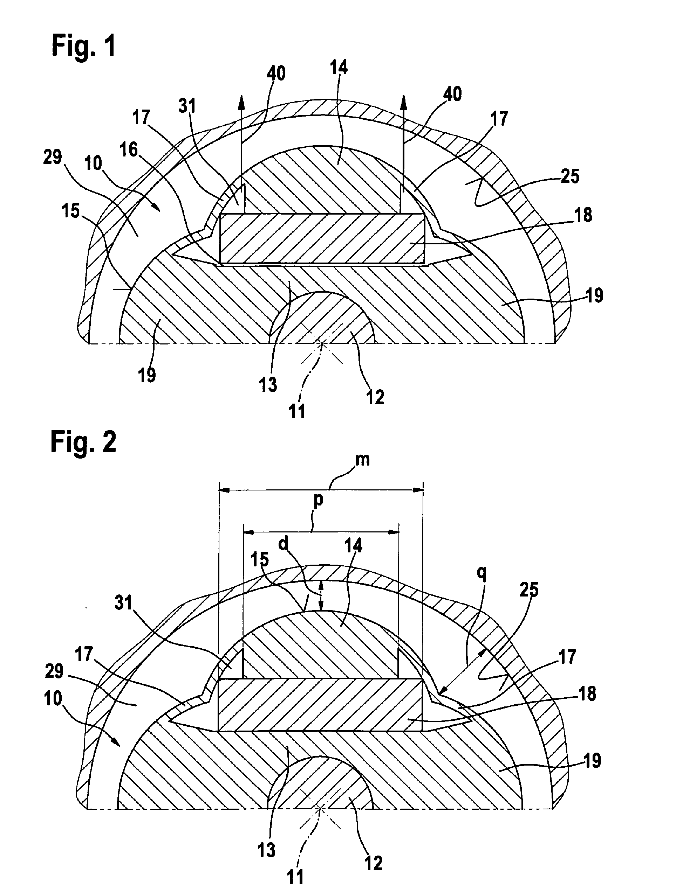

Die Fig. 1 bis 6 zeigen jeweils eine schematische Darstellung eines Rotors 10 einer permanentmagneterregten elektrischen Drehfeldmaschine. Dargestellt ist jeweils ein Schnitt entlang einer Ebene senkrecht zur Achse 11 des Rotors 10. Neben dem Rotor 10 ist jeweils auch die kreisförmige Innenkontur 25 eines Stators dargestellt. In jeder der Fig. 1 bis 6 sind die Achse 11 (senkrecht zur Zeichenebene) des Rotors 10, eine Welle 12 und ein Magnetflussleiter 13 mit mehreren Polen 14 dargestellt. Jeder Pol 14 weist eine Außenkontur 15 auf. In der Nähe mindestens eines Pols 15 weist der Magnetflussleiter 13 eine Ausnehmung 16 und zwei elastische Abschnitte 17 auf. In einer Ausnehmung 16 ist jeweils ein Permanent-magnet 18 angeordnet. Bei den in den Fig. 1, 2 und 6 dargestellten Rotoren 10 ist nur an jedem zweiten Pol 14 ein Permanentmagnet 18 in einer Ausnehmung 16 vorgesehen. In diesem Fall werden die Pole 19 ohne Permanentmagnet und ohne Ausnehmung als Folgepole bezeichnet.

Der Magnetflussleiter 13 weist beispielsweise ein magnetisch weiches Eisen oder ein anderes ferromagnetisches Material mit geringer Hysterese auf. Wenn das Material des Magnetflussleiters 13 eine elektrische Leitfähigkeit aufweist, kann der Magnetflussleiter 13 aus einem Stapel dünner Bleche bzw. Schichten aufgebaut sein, die jeweils durch dünne Isolatorschichten voneinander getrennt sind, um Wirbelstromverluste zu vermeiden.

Die Außenkontur 15 jedes Pols 14 ist kreisbogenförmig oder im Wesentlichen kreisbogenförmig. Die Tangente der Außenkontur 15 ist in der Mitte jedes Pols 14, 19 senkrecht oder im Wesentlichen senkrecht zur Richtung des Magnetflusses. Mit zunehmendem Abstand zur Mitte des Pols 14 weicht der Magnetfluss an der Außenkontur 15 von der Senkrechten auf die Tangente der Außenkontur 15 ab.

Die Ausnehmungen 16 und die darin angeordneten Permanentmagneten 18 weisen bei den dargestellten Beispielen jeweils im Wesentlichen die Form flacher Quader auf. Dabei können zumindest zwei parallele, große im Wesentlichen ebene Abschnitte der Außenfläche eines Magnets 18 an zwei im Wesentlichen parallelen Abschnitten einer Oberfläche der Ausnehmung 16 anliegen. Diese im Wesentlichen ebenen Abschnitte der Oberflächen der Permanentmagneten 18 und der Ausnehmungen 16 sind jeweils im Wesentlichen senkrecht zur lokalen Richtung des Magnetflusses.

Die elastischen Abschnitte 17 des Magnetflussleiters 13 sind bei den in den Fig. 1 bis 6 dargestellten Beispielen jeweils paarweise zu beiden Seiten jedes Pols 14 angeordnet und weisen die Form schmaler gerader oder leicht gekrümmter Stege auf.

Die Fig. 1 und 2 zeigen schematische Darstellungen eines Rotors 10 in zwei verschiedenen Phasen bzw. Zuständen bei der Herstellung. Fig. 1 zeigt einen Zustand, in dem die Ausnehmung 16 aufgeweitet ist. Die Ausnehmung 16 wird beispielsweise durch ein in den Fig. 1 und 2 nicht dargestelltes Werkzeug aufgeweitet, das in Eingreifabschnitte 31 zu beiden Seiten des Pols 14 eingreift und dort eine durch Pfeile 40 angedeutete aufweitende Kraft ausübt. Die Dicke der aufgeweiteten Ausnehmung 16 ist größer oder gleich der Dicke des Permanentmagneten 18. In Fig. 1 wird dies durch einen Spalt zwischen dem Permanentmagneten 18 und einer Wand der Ausnehmung 16 angedeutet. Der Permanentmagnet 18 kann in die aufgeweitete Ausnehmung 16 eingesetzt werden.

Nach dem Einsetzen des Permanentmagneten 18 in die Ausnehmung 16 wird die aufweitende Kraft 40 entfernt. Die Aufweitung der Ausnehmung 16 wird durch elastische Rückstellkräfte der elastischen Abschnitte 17 des Magnetflussleiters 13 rückgängig gemacht. Wie in Fig. 2 dargestellt, liegen die Wände der Ausnehmung 16 dann an den entsprechenden Oberflächen des Permanentmagneten 18 an oder üben sogar eine Kraft auf diese aus. Dazu werden die Dicke bzw. Höhe der Ausnehmung 16, die Dicke des Permanentmagneten 18 und - soweit frei wählbar - deren Toleranzintervalle bzw. Toleranzbereiche so gewählt, dass die minimale Dicke innerhalb des Toleranzintervalls der Dicke des Permanentmagneten 18 größer oder gleich der maximalen Dicke bzw. Höhe innerhalb des Toleranzintervalls der Dicke bzw. Höhe der Ausnehmung 16 ist.

Bei dem in Fig. 2 dargestellten Zustand wird der Permanentmagnet 18 durch die magnetische Anziehungskraft zwischen dem Permanentmagneten 18 und dem Magnetflussleiter 13 und/oder durch die von den elastischen Abschnitten 17 ausgeübten Kräfte sowie durch die resultierende Haftreibung zwischen dem Permanentmagneten 18 und dem Magnetflussleiter 13 in der Ausnehmung 16 gehalten. Eine Sicherung mittels Klebstoff oder Blechnasen ist nicht erforderlich, kann jedoch zusätzlich erfolgen.

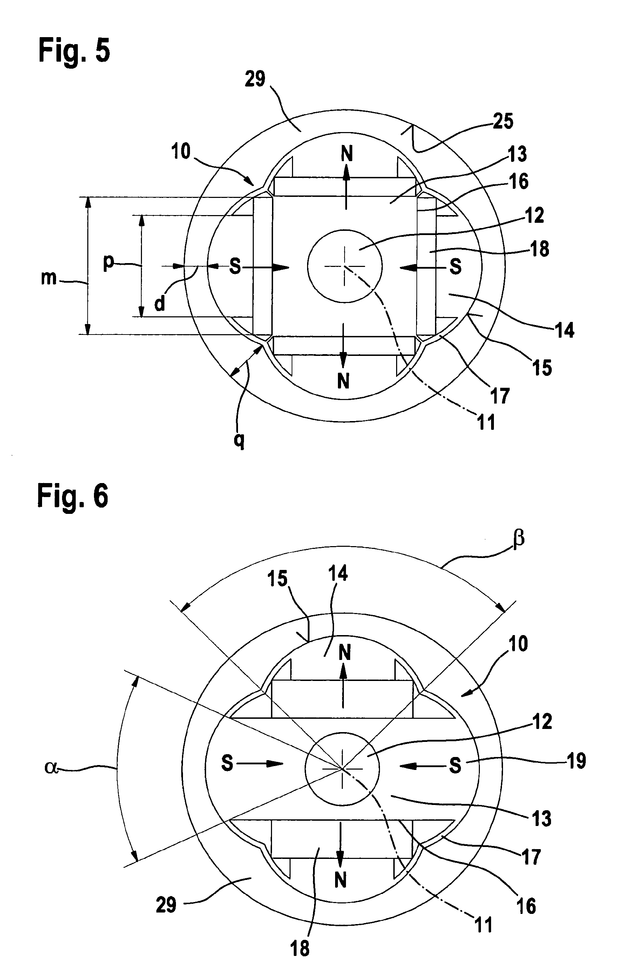

Bei dem oben anhand der Fig. 1 und 2 dargestellten Beispiel sind die Mittelpunkte der Außenkonturen 15 der Pole 14, 19 jeweils von der Achse 11 des Rotors 10 beabstandet. Der Luftspalt 29 zwischen den Außenkonturen der Pole 14 des Rotors 10 und der Innenkontur 25 des Stators variiert deshalb als Funktion des Winkels. Dies wird als zentrumsversetzte Kreisbogenkontur bezeichnet. In Fig. 2 sind die Breite m des Permanentmagneten 18, die Breite p des Pols 14, der minimale Abstand d und der maximale Abstand q der Außenkontur 15 des Rotors 10 von der Innenkontur 25 des Stators dargestellt. Die Verhältnisse p/m und q/d können die unten anhand der Fig. 5 und 6 beschriebenen Werte aufweisen, um die ebenfalls dort beschriebenen Vorteile zu erzielen.

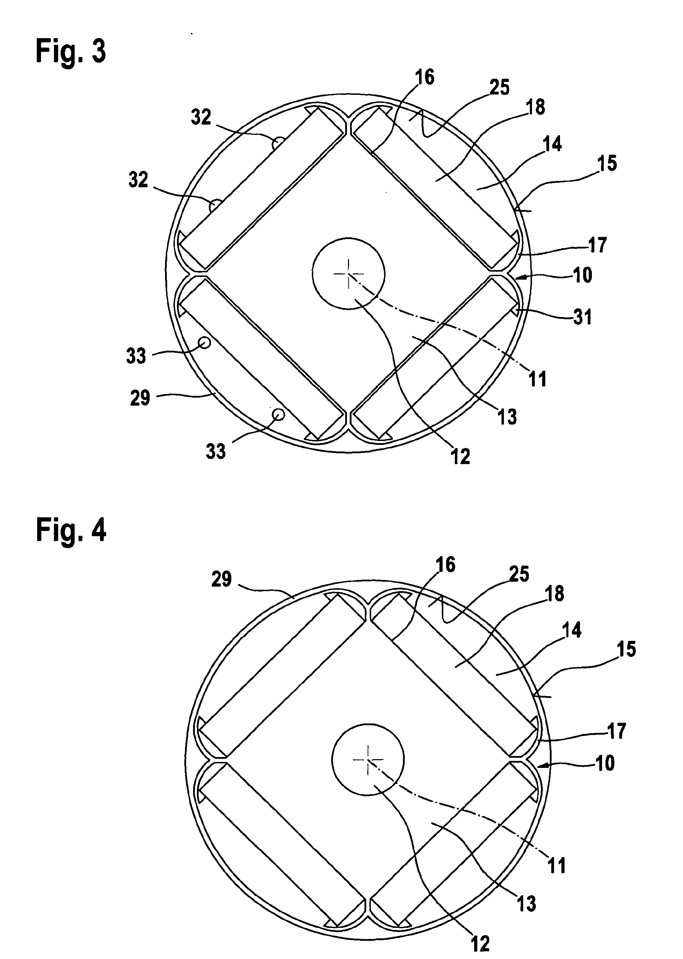

Die Fig. 3 und 4 zeigen Rotoren 10 mit jeweils vier Permanentmagneten 18 in entsprechenden Ausnehmungen 16. Die Außenkonturen 15 der Pole 14 sind jeweils kreisbogenförmig. Die Mittelpunkte dieser Kreisbögen liegen jedoch im Gegensatz zu den oben anhand der Fig. 1 und dargestellten Ausführungsbeispiele auf der Achse 11 des Rotors 10.

In Fig. 3 sind neben den bereits oben anhand der Fig. 1 und 2 beschriebenen paarweise seitlich der Pole 14 angeordneten Eingreifabschnitten 31 an jeweils einem Pol alternative Eingreifabschnitte 32 und alternative Eingreifabschnitte 33 dargestellt. Die Eingreifabschnitte 32 sind am Rand der Ausnehmung 16 angeordnet, die Eingreifabschnitte 33 sind als Bohrungen in den Polen 14 angeordnet. Vorteilhaft ist eine Anbringung gleicher Eingreifabschnitte an allen Polen 14, um alle Permanentmagneten 18 mit gleichen Werkzeugen einsetzen zu können.

In Fig. 3 sind die Ausnehmungen 16 im aufgeweiteten Zustand dargestellt, in dem zwischen dem Permanentmagneten 18 und dem Magnetflussleiter 13 jeweils ein Spalt erkennbar ist. In Fig. 4 ist die Situation dargestellt, die bereits oben anhand der Fig. 2 beschrieben wurde. Die Rückstellkräfte der elastischen Abschnitte 17 machen die Aufweitung der Ausnehmungen 16 ganz oder teilweise rückgängig. Die Permanentmagneten 18 sind in den Ausnehmungen 16 geklemmt und zumindest durch Haftreibung am Herausfallen gehindert.

Fig. 5 zeigt eine schematische Darstellung eines Rotors 10 ähnlich dem oben anhand der Fig. 1 und 2 dargestellten Rotor. Im Gegensatz zu letzterem weist der Rotor 10 hier jedoch an jedem Pol 14 einen Permanentmagneten 18 in einer Ausnehmung 16 auf. Die Polung der Permanentmagneten 18 ist durch die Buchstaben "N" und "S" gekennzeichnet. Der Quotient q/d der maximalen Dicke q (zwischen zwei benachbarten Polen 14) und der minimalen Dicke d (am Scheitel eines Pols 14) des Luftspalts zwischen den Außenkonturen 15 der Pole 14 einerseits und der Innenkontur 25 des Stators andererseits weist einen Wert im Intervall von 2,2 bis 2,4, insbesondere den Wert 2,3 auf. Der Quotient p/m der Breite p eines Pols 14 und der Breite m eines Permanentmagneten 18 weist einen Wert im Intervall von 0,74 bis 0,76, insbesondere den Wert 0,75 auf.

Fig. 6 zeigt eine schematische Darstellung eines Rotors 10 ähnlich dem oben anhand der Fig. 1 und 2 dargestellten Rotor. Die Quotienten q/d und p/m weisen die gleichen Werte auf wie bei dem oben anhand der Fig. 5 dargestellten Rotor. Der Quotient α/β der Winkelbreite α eines Folgepols 19 und dem Winkelabstand β zwischen zwei benachbarten Punkten mit maximaler Breite q des Luftspalts weist einen Wert im Bereich von 0,58 bis 0,64, insbesondere den Wert 0,62 auf. Dabei gilt bei insgesamt vier Polen 14, 19 beispielsweise β = π/2 = 90°. Die Winkelbreite α ist der Winkel unter dem die beiden Punkte, an denen die elastischen Abschnitte 17 an den Folgepol 19 grenzen, von der Achse 11 des Rotors 10 aus erscheinen.

Es hat sich gezeigt, dass bei den anhand der Fig. 5 und 6 dargestellten Quotienten q/d, p/m, α/β ein besonders geringes Rastmoment, eine besonders geringe Welligkeit des Drehmoments und ein besonders hohes mittleres Drehmoment erzielbar sind. Dies gilt insbesondere bei einer minimalen Breite d des Luftspalts von d = 2,3 mm und bei einem Durchmesser des Rotors 10 im Bereich von 30 mm bis 50 mm. Das Rastmoment und die Welligkeit des Drehmoments liegen im Bereich einer permanentmagneterregten elektrischen Drehfeldmaschine mit Richter-Kontur, das mittlere Drehmoment ist sogar höher als im Fall einer Richter-Kontur. Bei den anhand der Fig. 5 und 6 dargestellten Rotoren müssen die Permanentmagneten 18 nicht wie oben anhand der Fig. 1 bis 4 dargestellt, geklemmt, sondern können auch nur geklebt oder mit Blechnasen oder auf andere Weise fixiert sein.

Die oben anhand der Fig. 1 bis 4 dargestellte Klemmung eines Permanentmagneten in einer Ausnehmung eines Magnetflussleiters ist nicht nur bei einer permanentmagneterregten elektrischen Drehfeldmaschine, sondern beispielsweise auch am Stator bzw. Ständer eines Gleichstrommotors oder -generators und an einer permanentmagneterregten elektrischen Wanderfeldmaschine bzw. einem Linearmotor oder -generator anwendbar.

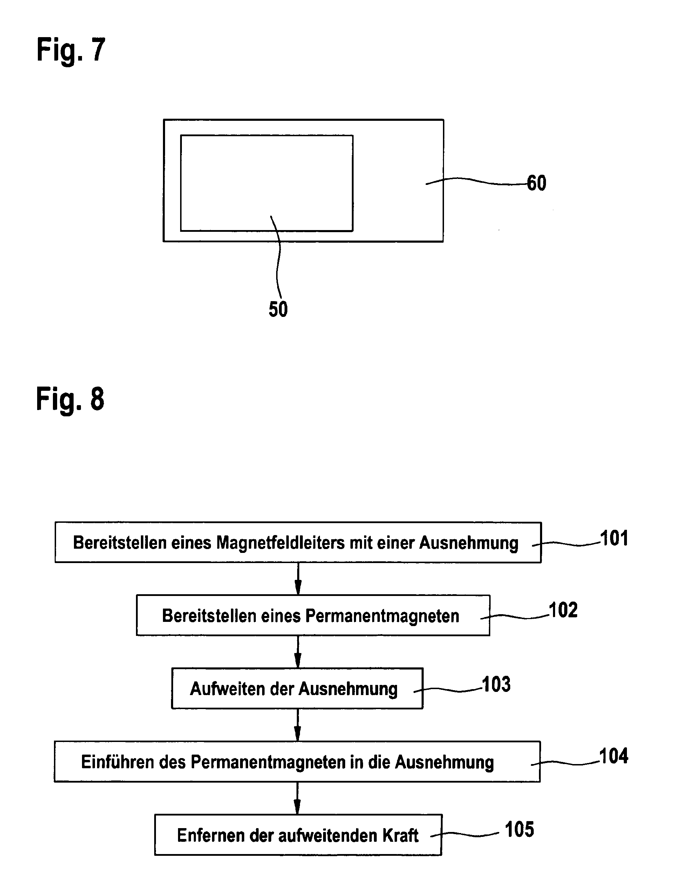

Fig. 7 zeigt eine schematische Darstellung einer elektrischen Maschine 50 in einer Fluidpumpe 60. Die elektrische Maschine 50 weist einen Stator oder einen Rotor auf, bei dem ein Permanentmagnet wie oben anhand der Fig. 1 bis 4 dargestellt durch eine Elastizität eines Magnetflussleiters geklemmt oder zumindest spaltfrei eingesetzt ist. Alternativ oder zusätzlich weist die elektrische Maschine 50 einen Rotor mit den oben anhand der Fig. 5 und 6 dargestellten Parametern auf.

Die in Fig. 7 dargestellte elektrische Maschine 50 kann als Nassläufer ausgebildet sein. Dabei rotiert der Rotor in dem von der Fluidpumpe 60 geförderten Fluid. Zum Schutz des Magnetflussleiters und/oder der Permanentmagneten vor dem Fluid kann der Rotor beispielsweise in eine dünnwandiges nichtmagnetisches Edelstahlrohr eingeschlossen sein. Zum Schutz des Stators und/oder von dessen Wicklungen vor dem Fluid kann an der Innenkontur des Stators beispielsweise ein Kunststoffrohr angeordnet sein, das gleichzeitig einen Teil des eigentlichen Pumpengehäuses oder des Fluidbehälters bildet.

Fig. 8 zeigt ein schematisches Flussdiagramm eines Verfahrens zum Herstellen eines Stators oder eines Läufers einer elektrischen Maschine. Obwohl dieses Verfahren auch auf andere als die oben dargestellten Maschinen anwendbar ist, werden nachfolgend zur Vereinfachung des Verständnisses beispielhaft die Bezugszeichen aus den Fig. 1 bis 6 verwendet.

Bei einem ersten Schritt 101 wird ein Magnetflussleiter 13 mit einer Ausnehmung 16 bereitgestellt. Bei einem zweiten Schritt 102 wird ein Permanentmagnet 18 bereitgestellt. Bei einem dritten Schritt 103 wird die Ausnehmung 16 durch Anlegen einer aufweitenden Kraft 40 aufgeweitet. Bei einem vierten Schritt 104 wird der Permanentmagnet in die aufgeweitete Ausnehmung eingeführt. Bei einem fünften Schritt 105 wird die aufweitende Kraft nach dem Einführen 104 des Permanentmagneten 18 in die aufgeweitete Ausnehmung 16 entfernt.

Alle oben anhand der Fig. 1 bis 7 dargestellten Maschinen können motorisch und/oder generatorisch betrieben werden und für einen motorischen und/oder generatorischen Betrieb ausgebildet sein. Gleiches gilt für elektrische Maschinen, die nach dem anhand der Fig. 8 dargestellten Herstellungsverfahren hergestellt sind.

## Patentansprüche

1. Permanentmagneterregte elektrische Drehfeldmaschine (50), mit:
einem Stator mit kreisförmiger Innenkontur (25):
- einem Rotor (10) mit mehreren Polen (14, 19), deren Außenkonturen (15) kreisbogenförmig sind:
- Permanentmagnete (18), die zum Erzeugen eines magnetischen Flusses in Polen (14) des Rotors (10) angeordnet sind; mit:
einem Magnetflussleiter (13) zum Leiten des magnetischen Flusses;
- einer Ausnehmung (16) in dem Magnetflussleiter (13), zum Aufnehmen des Permanentmagneten (18);
- elastischen Abschnitten (17) des Magnetflussleiters (13),
wobei die Ausnehmung (16) bei entspannten elastischen Abschnitten (17) zumindest in einer Richtung kleiner als der Permanentmagnet (18) ist **gekennzeichnet durch** :
- einem Luftspalt (29) zwischen der Innenkontur (25) des Stators und der Außenkontur (15) des Rotors (10),
wobei der Luftspalt (29) zwischen zwei Polen (14, 19) im Bereich eines Abschnitts (17) eine maximale Breite (g) und nahe einer Mitte eines Pols eine minimalen Breite (d) aufweist,
wobei der Quotient (g/d) aus der maximalen Breite (g) und der minimalen Breite (d) im Bereich von 2,2 bis 2,4 liegt,
wobei ein Quotient (p/m) aus einer Breite (p) des ersten Pols und einer Breite (m) des Permanentmagneten (18) im Bereich von 0,74 bis 0,76 liegt, und p in Richtung einer Sehne senkrecht zur Achse des Rotors (10) radial außerhalb des Permanentmagneten (18) gemessen wird.

2. Permanentmagneterregte elektrische Drehfeldmaschine (50) nach dem vorangehenden Anspruch, bei dem der elastische Abschnitt (17) zwei gegenüberliegende Oberflächenabschnitte der Ausnehmung (16) an zwei gegenüberliegende Oberflächenabschnitte des Permanentmagneten (18) presst.

3. Permanentmagneterregte elektrische Drehfeldmaschine (50) nach einem der vorangehenden Ansprüche, bei dem der elastische Abschnitt (17) stegförmig ist.

4. Permanentmagneterregte elektrische Drehfeldmaschine (50) nach einem der vorangehenden Ansprüche, wobei die elastischen Abschnitte (17) zwischen zwei Polen (14, 19) angeordnet sind.

5. Permanentmagneterregte elektrische Drehfeldmaschine (50) nach einem der vorangehenden Ansprüche, ferner mit:
- einem Eingreifabschnitt (31, 32, 33) zum Ansetzen eines Spreizwerkzeugs zum elastischen Aufweiten der Ausnehmung (16).

6. Permanentmagneterregte elektrische Drehfeldmaschine (50)) nach einem der vorangehenden Ansprüche, wobei die minimale Breite (d) des Luftspalts im Bereich von 2,0 mm bis 2,5 mm liegt.

7. Permanentmagneterregte elektrische Drehfeldmaschine (50)) nach einem der vorangehenden Ansprüche, wobei der Rotor (10) einen Durchmesser im Bereich von 30 mm bis 50 mm aufweist.

8. Permanentmagneterregte elektrische Drehfeldmaschine (50) nach einem der vorangehenden Ansprüche, wobei die Drehfeldmaschine einen Rotor (10) mit Folgepolanordnung mit zwei Permanentmagnetpolen (14) und zwei Folgepolen (19) aufweist, und wobei der Quotient (α/β) aus der Winkelbreite (α) eines Folgepols (19) und dem Winkelabstand (β) zwischen zwei Orten mit maximaler Breite (q) des Luftspalts (29) im Bereich von 0,58 und 0,64 liegt.

9. Permanentmagneterregte elektrische Drehfeldmaschine (50) nach einem der vorangehenden Ansprüche, wobei die Drehfeldmaschine eine Nassläufermaschine ist.

10. Elektrische Fluidpumpe (60) mit einer permanentmagneterregten elektrischen Drehfeldmaschine (50) nach einem der vorangehenden Ansprüche.

11. Verfahren zum Herstellen einer permanentmagneterregten elektrischen Drehfeldmaschine (50) nach einem der vorangehenden Ansprüche mit folgenden Schritten:
- Bereitstellen (101) eines Magnetflussleiters (13) mit einer Ausnehmung (16);
- Bereitstellen (102) eines Permanentmagneten (18);
- elastisch Aufweiten (103) der Ausnehmung (16) durch Anlegen einer aufweitenden Kraft (40);
- Einführen (104) des Permanentmagneten (18) in die aufgeweitete Ausnehmung (16);
- Entfernen (105) der aufweitenden Kraft nach dem Einführen (104) des Permanentmagneten (18).

12. Verfahren nach dem vorangehenden Anspruch bei dem das elastische Aufweiten (103) der Ausnehmung (16) ein elastisches Verformen eines elastischen Abschnitts (17) des Magnetflussleiters (13) umfasst.

13. Verfahren nach Anspruch 11 oder 12, bei dem eine nominale Dicke des Permanentmagneten (18) und eine nominale Dicke der Ausnehmung (16) so gewählt werden, dass eine minimale Dicke innerhalb eines Toleranzintervalls der Dicke des Permanentmagneten (18) größer oder gleich einer maximalen Dicke innerhalb eines Toleranzintervalls der Dicke der Ausnehmung (16) bei entspanntem elastischem Abschnitt (17) ist.

## Claims

1. Electrical three-phase machine (50) with permanent-magnet excitation, having:
a stator with a circular inner contour (25);
- a rotor (10) having a plurality of poles (14, 19), the outer contours (15) of said poles being in the form of an arc of a circle;
- permanent magnets (18) which are arranged in poles (14) of the rotor (10) for the purpose of generating a magnetic flux; having:
a magnetic-flux conductor (13) for conducting the magnetic flux;
- a recess (16) in the magnetic-flux conductor (13) for holding the permanent magnets (18);
- elastic sections (17) of the magnetic-flux conductor (13),
wherein the recess (16) is smaller than the permanent magnet (18) at least in one direction when elastic sections (17) are relaxed,
**characterized by**:
- an air gap (29) between the inner contour (25) of the stator and the outer contour (15) of the rotor (10), wherein the air gap (29) between two poles (14, 19) has a maximum width (g) in the region of a section (17) and a minimum width (d) close to a centre of a pole, wherein the quotient (g/d) of the maximum width (g) and the minimum width (d) is in the range of from 2.2 to 2.4,
wherein a quotient (p/m) of a width (p) of the first pole and a width (m) of the permanent magnet (18) is in the range of from 0.74 to 0.76, and p is measured in the direction of a chord perpendicular to the axis of the rotor (10) radially outside the permanent magnet (18).

2. Electrical three-phase machine (50) with permanent-magnet excitation according to the preceding claim, in which the elastic section (17) presses two opposite surface sections of the recess (16) against two opposite surface sections of the permanent magnet (18).

3. Electrical three-phase machine (50) with permanent-magnet excitation according to either of the preceding claims, in which the elastic section (17) is in the form of a web.

4. Electrical three-phase machine (50) with permanent-magnet excitation according to one of the preceding claims, wherein the elastic sections (17) are arranged between two poles (14, 19).

5. Electrical three-phase machine (50) with permanent-magnet excitation according to one of the preceding claims, also having:
- an engagement section (31, 32, 33) for applying a spreading tool for elastically widening the recess (16).

6. Electrical three-phase machine (50) with permanent-magnet excitation according to one of the preceding claims, wherein the minimum width (d) of the air gap is in the range of from 2.0 mm to 2.5 mm.

7. Electrical three-phase machine (50) with permanent-magnet excitation according to one of the preceding claims, wherein the rotor (10) has a diameter in the range of from 30 mm to 50 mm.

8. Electrical three-phase machine (50) with permanent-magnet excitation according to one of the preceding claims, wherein the three-phase machine has a rotor (10) with consequent-pole arrangement having two permanent-magnet poles (14) and two consequent poles (19), and wherein the quotient (α/β) of the angular width (α) of a consequent pole (19) and the angular distance (β) between two locations with a maximum width (q) of the air gap (29) is in the range of from 0.58 to 0.64.

9. Electrical three-phase machine (50) with permanent-magnet excitation according to one of the preceding claims, wherein the three-phase machine is a wet-rotor machine.

10. Electrical fluid pump (60) having an electrical three-phase machine (50) with permanent-magnet excitation according to one of the preceding claims.

11. Method for producing an electrical three-phase machine (50) with permanent-magnet excitation according to one of the preceding claims, comprising the following steps:
- providing (101) a magnetic flux conductor (13) having a recess (16);
- providing (102) a permanent magnet (18);
- elastically widening (103) the recess (16) by applying a widening force (40);
- inserting (104) the permanent magnet (18) into the widened recess (16);
- removing (105) the widening force after the permanent magnet (18) has been inserted (104).

12. Method according to the preceding claim, in which the elastic widening (103) of the recess (16) comprises elastic deformation of an elastic section (17) of the magnetic-flux conductor (13).

13. Method according to Claim 11 or 12, in which a nominal thickness of the permanent magnet (18) and a nominal thickness of the recess (16) are selected such that a minimum thickness within the tolerance interval of the thickness of the permanent magnet (18) is greater than or equal to a maximum thickness within the tolerance interval of the thickness of the recess (16) when the elastic section (17) is relaxed.

## Revendications

1. Machine à champ tournant (50) électrique excitée par un aimant permanent, comprenant :
- un stator ayant un contour intérieur (25) de forme circulaire ;
- un rotor (10) doté de plusieurs pôles (14, 19) dont les contours extérieurs (15) sont en forme d'arc de cercle ;
- des aimants permanents (18) qui sont disposés pour générer un flux magnétique dans les pôles (14) du rotor (10) ; comprenant :
un conducteur de flux magnétique (13) pour conduire le flux magnétique ;
- un évidement (16) dans le conducteur de flux magnétique (13) pour accueillir l'aimant permanent (18) ;
- des portions élastiques (17) du conducteur de flux magnétique (13),
l'évidement (16), dans le cas de portions élastiques (17) qui peuvent être détendues, étant plus petit que l'aimant permanent (18) dans au moins une direction, **caractérisée par** :
- un entrefer (29) entre le contour intérieur (25) du stator et le contour extérieur (15) du rotor (10), l'entrefer (29) présentant une largeur maximale (q) entre deux pôles (14, 19) dans la zone d'une portion (17) et une largeur minimale (d) à proximité d'un centre d'un pôle,
le quotient (q/d) de la largeur maximale (q) et de la largeur maximale (d) se trouvant dans la plage de 2,2 à 2,4,
un quotient (p/m) d'une largeur (p) du premier pôle et d'une largeur (m) de l'aimant permanent (18) se trouvant dans la plage de 0,74 à 0,76 et p étant mesurée dans la direction d'une corde perpendiculaire à l'axe du rotor (10) à l'extérieur de l'aimant permanent (18) dans le sens radial.

2. Machine à champ tournant (50) électrique excitée par un aimant permanent selon la revendication précédente, dans laquelle la portion élastique (17) comprime deux portions de surface opposées de l'évidement (16) contre deux portions de surface opposées de l'aimant permanent (18).

3. Machine à champ tournant (50) électrique excitée par un aimant permanent selon l'une des revendications précédentes, dans laquelle la portion élastique (17) est en forme de nervure.

4. Machine à champ tournant (50) électrique excitée par un aimant permanent selon l'une des revendications précédentes, dans laquelle les portions élastiques (17) sont disposées entre deux pôles (14, 19).

5. Machine à champ tournant (50) électrique excitée par un aimant permanent selon l'une des revendications précédentes, comprenant en outre :
- une portion de prise (31, 32, 33) pour appliquer un outil d'écartement afin d'élargir l'évidement (16) par effet élastique.

6. Machine à champ tournant (50) électrique excitée par un aimant permanent selon l'une des revendications précédentes, dans laquelle la largeur minimale (d) de l'entrefer se trouve dans la plage de 2,0 mm à 2,5 mm.

7. Machine à champ tournant (50) électrique excitée par un aimant permanent selon l'une des revendications précédentes, dans laquelle le rotor (10) présente un diamètre de 30 mm à 50 mm.

8. Machine à champ tournant (50) électrique excitée par un aimant permanent selon l'une des revendications précédentes, dans laquelle la machine à champ tournant présente un rotor (10) avec un arrangement de pôles conséquents comprenant deux pôles d'aimant permanent (14) et deux pôles conséquents (19), et le quotient (α/β) de la largeur angulaire (α) d'un pôle conséquent (19) et de l'écart angulaire (β) entre deux point de largeur maximale (q) de l'entrefer (29) se trouve dans la plage de 0,58 à 0,64.

9. Machine à champ tournant (50) électrique excitée par un aimant permanent selon l'une des revendications précédentes, dans laquelle la machine à champ tournant est une machine à rotor humide.

10. Pompe à fluide électrique (60) équipée d'une machine à champ tournant (50) électrique excitée par un aimant permanent selon l'une des revendications précédentes.

11. Procédé de fabrication d'une machine à champ tournant (50) électrique excitée par un aimant permanent selon l'une des revendications précédentes comprenant les étapes suivantes :
- mise à disposition (101) d'un conducteur de flux magnétique (13) muni d'un évidement (16) ;
- mise à disposition (102) d'un aimant permanent (18) ;
- élargissement par effet élastique (103) de l'évidement (16) en appliquant une force d'élargissement (40) ;
- introduction (104) de l'aimant permanent (18) dans l'évidement élargi (16) ;
- suppression (105) de la force d'élargissement après l'introduction (104) de l'aimant permanent (18).

12. Procédé selon la revendication précédente, dans lequel l'élargissement par effet élastique (103) de l'évidement (16) comprend une déformation élastique d'une portion élastique (17) du conducteur de flux magnétique (13).

13. Procédé selon la revendication 11 ou 12, dans lequel une épaisseur nominale de l'aimant permanent (18) et une épaisseur nominale de l'évidement (16) sont choisies de telle sorte qu'une épaisseur minimale à l'intérieur d'un intervalle de tolérance de l'épaisseur de l'aimant permanent (18) est supérieure ou égale à une épaisseur maximale à l'intérieur d'un intervalle de tolérance de l'épaisseur de l'évidement (16) lorsque la portion élastique (17) est détendue.
